# EUROPÄISCHE PATENTSCHRIFT

(11) **EP 4 101 586 B1**
(45) Veröffentlichungstag und Bekanntmachung des Hinweises auf die Patenterteilung: **03.01.2024**
(21) Anmeldenummer: 21178072.1
(22) Anmeldetag: 07.06.2021
(51) Int. Cl.: B24B 9/14, B24B 13/005, G02B 27/00

(54) **SCHUTZFILMENTFERNUNGSVORRICHTUNG UND VERFAHREN JEWEILS ZUM LÖSEN EINES SCHUTZFILMS VON EINER OPTISCHEN LINSE**
PROTECTIVE FILM REMOVAL DEVICE AND METHOD FOR RELEASING A PROTECTIVE FILM FROM AN OPTICAL LENS
DISPOSITIF DE RETRAIT DE FILM PROTECTEUR ET PROCÉDÉ DE LIBÉRATION RESPECTIVE D'UN FILM PROTECTEUR D'UNE LENTILLE OPTIQUE

(43) Veröffentlichungstag der Anmeldung: 14.12.2022
(73) Patentinhaber: Optotech Optikmaschinen GmbH, 35435 Wettenberg/Launsbach (DE); Carl Zeiss Vision International GmbH, 73430 Aalen (DE)
(72) Erfinder: VOLKEN, Claude, 4710 Blasthal (CH); LACK, Oswin, 35625 Hüttenberg-Weidenhausen (DE); VALLERIUS, Ralf, 89520 Heidenheim (DE); HÄNSCH, Sven, 73453 Abtsgmünd (DE)
(74) Vertreter: Patentanwälte Olbricht Buchhold Keulertz

(56) Entgegenhaltungen:
- EP-B1- 2 042 265
- DE-A1-102015 121 682

## Beschreibung

Anspruch 1 und ein dazugehöriges Verfahren, jeweils zum Lösen eines Schutzfilms von einer optischen Linse.

Aus optischen Linsenrohlingen werden insbesondere Brillengläser hergestellt. Obwohl hierbei individuelle optische Flächen hergestellt werden müssen, um Sehfehler von Personen zu korrigieren, gleicht die Fertigung einer Massenproduktion. Nur so lassen sich die Brillengläser kostengünstig herstellen. Weil die Herstellung von Optiken klassischer Weise ein Handwerk ist und immer noch eine hohe Flexibilität notwendig ist, um die notwendigen optischen Flächen herzustellen, existieren im Stand der Technik zahlreiche Maschinen, um einzelne Arbeitsschritte automatisiert auszuführen, so zum Beispiel Fräsmaschinen, Drehmaschinen, Poliermaschinen und Beschichtungsmaschinen. Zwischen diesen automatisierten Arbeitsschritten werden jedoch weiterhin manuelle Arbeitsschritte ausgeführt.

Einer dieser Arbeitsschritte betrifft das Abziehen von Schutzfolien, die auf einer ersten Linsenfläche eines optischen Linsenrohlings aufgebracht werden, damit die zweite Linsenfläche bearbeitet werden kann, ohne dass die erste Linsenfläche hierbei beschädigt wird. Zum Abziehen nimmt ein Arbeiter ein spitzes Werkzeug, um die Abdeckfolie anzuheben und dann abzuziehen. Das ist jedoch zeitaufwändig und führt außerdem zu Kratzern auf der Oberfläche des Linsenrohlings. Hierdurch erhöht sich der Ausschuss.

Aus DE 10 2015 121 682 A1 ist bekannt, einen Schutzfilm dadurch von einer Linsenoberfläche zu lösen, dass man diesen Schutzfilm in einem Bereich greift, in dem die Linsenoberfläche eine Ausnehmung in der Linsenoberfläche überspannt. Anschließend wird der Schutzfilm mechanisch abgezogen. Nachteilhaft hieran ist, dass die Ausnehmung vor dem Aufbringen des Schutzfilms ausgebildet sein muss. Damit man dort später überhaupt greifen kann.

Aus EP 2 042 265 B1, auf welcher der Oberbegriff des Anspruchs 1 basiert, ist ein Verfahren zum Ablösen einer Schutzfolie von einer Linse bekannt bei dem die Linse rotiert wird, während mit einer einzelnen Düse mit variabel geneigtem Fluidstrahl (entsprechend einer Dreckfräse eines Hochdruckreinigers) heißes Fluid vom Umfang her gegen die Linse gespritzt wird. Durch den kegeligen und sich hinsichtlich des Winkels ändernden heißen Druckstrahl wird die Schutzfolie erwärmt und der Klebstoff der Schutzfolie weich. Schließlich schmilzt der Klebstoff der Schutzfolie soweit, dass sich die Schutzfolie vom Druckstrahl unterstützt an ihrem Umfang löst. Anschließend löst sich die Schutzfolie sukzessive durch Unterstützung des Drucks des Fluidstrahls weiter ab. Nachteilhaft ist hierbei der Verbleib von geschmolzenem Klebstoff auf der Linsenfläche, der im Nachgang entfernt werden muss. Außerdem wird sehr viel heißes Fluid benötigt, dass aufgrund seines kegeligen Versprühens eine große Oberfläche zur Umgebung aufweist. Es geht daher viel Wärmeenergie an die Umgebung verloren, die entsprechend neu zugeführt werden muss. Außerdem entsteht eine große Menge hochfeuchter Luft, die in die Werkshallen austritt. Selbst wenn man das Verfahren in einem Fluidkreislauf betreibt, wird viel Energie aufgewendet und es ist stetig neues Fluid für das verdampfte Fluid zu ergänzen.

Aufgabe der Erfindung ist es daher, eine Vorrichtung und ein Verfahren bereitzustellen, mit denen ein Schutzfilm effizient, effektiv und möglichst ohne Kleberückstände von einer Linsenoberfläche entfernen lässt. Beides soll einen hohen Automatisierungsgrad erlauben. Die Lösung soll dabei einfach ausführbar und kostengünstig sein.

Die Erfindung gemäß Anspruch 1 betrifft eine Schutzfilmentfernungsvorrichtung mit einer ersten Entfernungsstation zum Lösen eines Schutzfilms von einer ersten Linsenoberfläche einer optischen Linse (dazu zählen auch unbearbeitete und teilbearbeitete Linsenrohlinge), mit einem Linsenhalter, insbesondere zur Aufnahme der optischen Linse, wobei der Linsenhalter eine imaginäre Mittelachse aufweist, die insbesondere bei aufgenommener optischer Linse quer zur ersten Linsenoberfläche ausgerichtet ist. Außerdem weist die erste Entfernungsstation wenigstens eine Fluiddüse mit einem Düsenaustrittskanal auf. Des Weiteren weist die Schutzfilmentfernungsvorrichtung eine Drehlagerung zwischen dem Linsenhalter (einerseits) und der oder den Fluiddüsen (andererseits) auf, wobei die Drehlagerung derart ausgebildet ist, dass mit der oder den Fluiddüsen eine Relativbewegung um die Mittelachse ausführbar ist, wobei der Düsenaustrittskanal der Fluiddüsen jeweils nach innen (insbesondere bezogen auf die Drehlagerung) ausgerichtet ist.

Gemäß der Erfindung ist zwischen dem Linsenhalter und der oder den Fluiddüsen eine Hubvorrichtung derart ausgebildet, dass mit der oder den Fluiddüsen eine Relativbewegung zum Linsenhalter ausführbar ist, die längs, vorzugsweise zumindest im Wesentlichen parallel und besonders bevorzugt parallel zur Mittelachse ausgerichtet ist. Der Vorteil der Hubvorrichtung liegt darin, dass der oder die Fluidstrahlen der Fluiddüsen einerseits um den Umfang herumgeführt, und zusätzlich hinsichtlich ihrer Höhenlage eingestellt werden können, dies bspw. kontinuierlich, langsam, schnell, oszillierend, ruckartig oder harmonisch. Der Fluidstrahl lässt sich so nicht nur um den Umfang herum auf den Linsenumfang richten, sondern gezielt auf die Höhenlagen einstellen, in denen der bestmögliche Lösungseffekt für den Schutzfilm erzielt wird. Dies wird insbesondere dem Umstand gerecht, dass sich der optionale Auftreffpunkt des Fluids mit dem sich sukzessive lösenden Schutzfilm verschiebt. Es gelingt mittels der Hubvorrichtung ein präzises, lokales Ablösen des Schutzfilms. Anstatt mit einem großvolumigen Fluidstrahl zu arbeiten, genügt es durch die Hubvorrichtung einen wesentlich feineren Fluidstrahl zu nutzen. Hierdurch werden Fluid und Energie eingespart. Bei dem Schutzfilm kann es sich insbesondere um eine Folie handeln, bspw. eine selbstklebende Folie. Optional kann die Hubvorrichtung einen Hubantrieb aufweisen. Damit ist die Hubbewegung individuell ausführbar. Bei dem Hubantrieb handelt es sich bevorzugt um einen pneumatischen Hubzylinder oder einen elektrischen Motor, beispielsweise einen elektrischen Linearmotor oder einen Spindelantrieb. Ein pneumatischer Hubzylinder agiert vergleichsweise schnell, während mit dem elektrischen Motor sehr präzise Stellbewegungen und Stellbewegungen mit definierten Beschleunigungen durchführbar sind. Damit lässt sich die Zielposition besonders präzise anvisieren. Außerdem können die optionalen oszillierenden Bewegungen mit besonders kleinen Stellwegen ausgeführt werden. Bevorzugt ist hierzu die Position der oberen Glaskante der optischen Linse bekannt. Dadurch kann das optionale Oszillieren auf ein Minimum entlang der Glaskante gebracht werden und so ein Maximum an Effektivität des Fluidstrahls bzw. der Fluidstrahlen erreicht werden.

Eine preiswertere Alternative zum Hubantrieb wäre ein mechanisches Korrelationsgetriebe, beispielhaft ein Kurvengetriebe, dass die Hubbewegungen der Hubvorrichtung an die Drehbewegung der Drehlagerung koppelt.

In einer anderen oder ergänzenden Erfindungsausprägung sind der oder die Düsenaustrittskanäle jeweils derart ausgebildet, dass sie einen zumindest im Wesentlichen geraden, insbesondere zylindrischen und insbesondere laminaren, Strahl aus Fluid erzeugen. Der Einsatz eines solchen Strahls erlaubt es wesentlich einfacher als bei turbulenten Strahlen wie bei einer Dreckfräse, das Lösen des Schutzfilms zu simulieren und hinsichtlich der eingesetzten Ressourcen Fluid und Energie zu optimieren. Anders als solch ein Strahl mit sich ändernder Neigung lässt sich der gerade Strahl fein auf die Trennlinie zwischen der optischen Linse und dem Schutzfilm ausrichten. Bei Varianten mit mehr als einer Fluiddüse können optional die Fluidstrahlen der Fluiddüsen den gleichen oder einen abweichenden Durchmesser haben. Gleiche Durchmesser sind insbesondere dann besonders geeignet, wenn der Drehwinkel so ausgebildet ist, dass jede Fluiddüse für das Lösen des Schutzfilms in einem definierten Drehwinkelbereich zuständig ist. Bei größeren Drehwinkeln sind Vorteile mit unterschiedlichen Durchmessern der Fluidstrahlen erzielbar, denn dann bearbeiten mehrere Düsen den gleichen Winkelbereich der optischen Linse und unterschiedliche Durchmesser der Fluidstrahlen gehen mit unterschiedlichen Wirkkräften auf den Schutzfilm einher, die sich gegenseitig ergänzen können.

Gemäß einer optionalen Ausgestaltung ist der Linsenhalter drehfest angeordnet, insbesondere drehfest relativ zu einem Maschinengestell, und die Fluiddüse oder die Fluiddüsen sind jeweils drehbar um die Drehlagerung angeordnet, insbesondere drehbar relativ zu einem bzw. dem Maschinengestell. Daraus resultiert gewissermaßen ein Düsenkarussell, mit dem die Fluiddüsen um den Linsenhalter gedreht werden. Eine solche Ausgestaltung entfaltet vor allem dann Vorteile, wenn noch mehr Werkzeuge als die Fluiddüse die statisch angeordnete Linse bearbeiten sollen.

In einer speziellen Ausführungsform weist der Linsenhalter eine Aufnahmefläche auf, auf der insbesondere die optische Linse im aufgenommenen Zustand aufliegt. Das Halten der Linse von der Rückseite her ist am wenigsten störend für die Fluidstrahlen, welche einen freien Zugang zum Linsenumfang haben sollten. Alternativ oder ergänzend kommt jedoch auch ein Halter in Betracht, der die optische Linse am Linsenumfang greift.

Optional kann durch die Aufnahmefläche wenigstens ein Ansaugkanal ausmünden, insbesondere um die optische Linse durch Unterdruck an der Aufnahmefläche zu fixieren. Dadurch kann eine Vakuumhalterung (bzw. Unterdruckhalterung) bereitgestellt werden. Diese ist besonders schonend zu ggf. bereits optisch wirksamen Oberflächen. Dabei kann im Speziellen der Ansaugkanal mit einer Unterdruckpumpe verbunden sein. Damit gelingt ein schnelles und automatisiertes Festsaugen der optischen Linse an dem Linsenhalter.

Der Linsenhalter kann von Seiten der Drehlagerung, von der Seite oder von der der Drehlagerung gegenüberliegenden Seite gehalten sein. Eine Verbindung mit dem Maschinengestell von Seiten der Drehlagerung erlaubt eine freie relative Drehbewegung zwischen Linsenhalter und Fluiddüsen. Ein Halten von der Seite vereinfacht das Be- und Entladen des Linsenhalters mit optischen Linsen. Dahingegen ist ein Halten von der der Drehlagerung gegenüberliegenden Seite günstig bezüglich einem freien Drehen und dem Be- und Entladen umsetzbar. Dafür sind aber ggf. Haltelemente zwischen der optischen Linse und den Fluiddüsen erforderlich, die einen kleinen Sprühschatten auf dem Umfang um die Linse ausbilden, weil sie zwischen der oder den Fluiddüsen und der optischen Linse angeordnet sind.

Gemäß einer weiteren optionalen Erfindungsausprägung sind der oder die Düsenaustrittskanäle jeweils über einen Zulauf, insbesondere einen gemeinsamen Zulauf, mit Fluid gespeist, wobei im Zulauf eine Förderpumpe, insbesondere eine gemeinsame Förderpumpe, und/oder eine Kühlvorrichtung, insbesondere eine gemeinsame Kühlvorrichtung, zum Kühlen des Fluids angeordnet ist. Das Nutzen einer gemeinsamen Förderpumpe ist kosteneffizient. Eine Kühlvorrichtung hat den Vorteil, dass auch bei ungünstigen Umgebungstemperaturen, zum Beispiel in nicht klimatisierten Werkhallen, ein ungewolltes Erwärmen des Fluids verhindert werden kann. Auf diese Weise lässt es sich außerdem verhindern, dass der Klebstoff des Schutzfilms schmilzt und Rückstände hiervon auf der Linsenfläche zurückbleiben. Das gekühlte Fluid trägt dazu bei, dass der Klebstoff an dem sich lösenden Schutzfilm haftet. Zum Zulauf soll optional auch der Abschnitt ab Austritt aus den Fluiddüsen gehören, dies insbesondere wenn eine Rückführung des Fluids zur erneuten Verwendung vorgesehen ist. Die Kühlvorrichtung kann als passiver Wärmetauscher ausgebildet sein. Um von Umgebungsparametern unabhängig zu sein, bietet sich als Alternative an, dass die Kühlvorrichtung ein Kühlaggregat oder eine Wärmepumpe aufweist. Die Abwärme des Fluids kann optional verwertet werden, bspw. durch ein Gebläse zum Trockenblasen der Linse nach dem Lösen des Schutzfilms.

In einer besonderen Ausführungsform ist im Zulauf ein Sammelbehälter angeordnet, in dem sich aus den Fluiddüsen ausgetretenes Fluid sammelt. Hierdurch lässt sich das Fluid wiederholt nutzen. Vorzugsweise wird ein Filter im Zulauf angeordnet. Damit können Schmutzpartikel wie Bearbeitungsrückstände, die der optischen Linse vor dem Lösen des Schutzfilms anhaften können, aus dem Fluid entfernt werden.

Weiterhin können die Düsenaustrittskanäle jeweils in Richtung der Mittelachse weisen. Damit treffen sie ohne Anstellung in Umfangsrichtung auf den Linsenumfang bzw. die Trennlinie zwischen Linsenoberfläche und Schutzfilm. Dieser Winkel erweist sich als besonders effektiv zum Ablösen des Schutzfilms.

Im Speziellen können der oder die Düsenaustrittskanäle jeweils mit Ausnahme der Drehlagerung einen statischen Winkel aufweisen, insbesondere relativ zur Mittelachse. Damit kommt die Vorrichtung mit wenigen Antrieben aus, selbst wenn mehrere Fluiddüsen vorgesehen sind. Vorzugsweise weist der Düsenaustrittskanal oder weisen die Düsenaustrittskanäle leicht schräg von oben in Richtung des Linsenhalters und/oder dessen Aufnahmefläche 11. Weiterhin beträgt der Winkel zwischen einer Ausrichtungsebene, die senkrecht zur Mittelachse ausgerichtet ist und dem oder den Düsenaustrittskanälen bevorzugt zwischen -5 Grad und 50 Grad, weiter bevorzugt zwischen 0 Grad und 40 Grad und besonders bevorzugt zwischen 5 Grad und 35 Grad.

Vorzugsweise weist die Drehlagerung eine Drehachse auf, die koaxial zur Mittelachse ausgerichtet ist. Damit wird ein konstanter Abstand der Fluiddüsen zu kreisförmigen Linsenumfängen erreicht, wobei es sich um die weitest verbreitete Ausführungsform von Linsenrohlingen handelt.

Praktisch erscheint, wenn die Drehlagerung auf der Seite des Linsenhalters angeordnet ist, die von der Aufnahmeseite der optischen Linse wegweist. Auf diese Weise besteht freier Zugang zum Be- und Entladen des Linsenhalters. In einer bevorzugten Ausführung liegt die Drehlagerung geodätisch unter dem Linsenhalter. Auf diese Weise lassen sich die optischen Linsen einfach von oben einlegen und es sind Zustände des Linsenhalters unkritisch, in denen keine Fixierung aktiv ist (bspw. Stromausfall, Arbeitsunterbrechung, Übergabezeitpunkte beim Be- und Entladen des Linsenhalters, etc.).

Die Drehlagerung weist bevorzugt einen Drehantrieb auf. Dies erlaubt einen aktiven Antrieb, sodass sich die Fluidstrahlen präzise gesteuert über dem Umfang der optischen Linse aufbringen lassen. Der Drehantrieb weist vorzugsweise einen Elektromotor auf. Eine denkbare Alternative zum Drehantrieb wäre beispielsweise eine Drehbewegung, die aus dem Impuls der Fluidstrahlen resultiert.

Gemäß einer optionalen Weiterbildung weist die Drehlagerung ein Drehlager und hieran einen Ausleger oder eine Scheibe auf, wobei die Fluiddüse oder die Fluiddüsen jeweils an dem Ausleger oder der Scheibe festgelegt sind. Hierdurch lässt sich ein kleines Drehlager im Zentrum einsetzen und die Fluiddüsen lassen sich dennoch vom Zentrum entfernt anordnen.

Eine weitere ergänzende oder alternative Erfindungsausprägung kann darin bestehen, dass die Drehlagerung einen begrenzten Drehbereich aufweist, wobei der Drehbereich bevorzugt weniger als 360 Grad beträgt, und wobei vorzugsweise ein Drehantrieb mit Richtungswechsler vorgesehen ist, insbesondere um die Fluiddüsen und den Linsenhalter oder dessen optionale Aufnahmefläche mit Drehrichtungswechsel relativ zueinander hin- und herzuschwenken. Damit werden weniger große Belastungsanforderung an die Drehbarkeit gestellt, wozu insbesondere auch verschiedene Drehdurchführungen gehören, über die beispielsweise das Fluid zu den Fluiddüsen transportiert werden kann. Bei begrenzten Drehwinkeln kann statt Drehdurchführungen auch die Verwendung von bspw. flexiblen Schläuchen in Betracht kommen.

Bei einer besonderen Ausführungsform ist der Linsenhalter höhenlagefest angeordnet, insbesondere während des Lösens des Schutzfilms und insbesondere höhenlagefest relativ zu einem Maschinengestell, und die Fluiddüsen sind mit der Hubvorrichtung längs zur Mittelachse beweglich angetrieben, insbesondere beweglich relativ zu einem Maschinengestell. Damit sind die Werkzeuge, nämlich die Fluiddüsen, der höhenbewegliche Teil, der auf das Werkstück, nämlich die optische Linse, ausgerichtet werden kann. Optional kann die Lagerung jedoch auch umgekehrt ausgeführt werden.

Eine optionale Variante besteht darin, dass die Drehlagerung zwischen der Hubvorrichtung einerseits und der oder den Fluiddüsen andererseits angeordnet ist. Dann wird die Drehlagerung mit der Hubvorrichtung mitbewegt. Alternativ könnte die Anordnung auch umgekehrt sein, also die Hubvorrichtung zwischen der Drehlagerung einerseits und den Fluiddüsen andererseits angeordnet sein. Dann gehört die Hubvorrichtung zur sich drehenden Masse.

Optional weist die Schutzfilmentfernungsvorrichtung exakt zwei oder wenigstens zwei oder exakt drei oder wenigstens drei Fluiddüsen auf. Zwei, drei oder mehr Fluiddüsen tragen dazu bei, dass weniger relative Umdrehungen zwischen optischer Linse und den Fluiddüsen notwendig sind, um den Schutzfilm zu entfernen. Die Varianten mit exakt zwei oder exakt drei Fluiddüsen sind dabei aus Kostengründen die bevorzugten Anzahlen.

Gemäß einer weiteren ergänzenden oder alternativen Erfindungsausprägung weist die Schutzfilmentfernungsvorrichtung exakt zwei oder wenigstens zwei Fluiddüsen auf, wobei eine der zwei Fluiddüsen um einen definierten Drehwinkel um die Mittelachse versetzt zur anderen der zwei Fluiddüsen angeordnet ist. Damit wird die Geschwindigkeit des Ablösens des Schutzfilms erhöht. Der Drehwinkel kann beispielsweise zwischen 10 und 180 Grad liegen, liegt bevorzugt zwischen 20 und 90 Grad und besonders bevorzugt zwischen 30 und 60 Grad. Des Weiteren gelingt es mit Hilfe der zwei versetzt angeordneten Fluiddüsen auch bei einem Drehbereich der Drehlagerung von weniger als 360 Grad 360 Grad des Linsenumfangs abfahren zu können.

Optional können die zwei Fluiddüsen fest miteinander verbunden sein, sodass zwischen dem Linsenhalter einerseits und den zwei Fluiddüsen andererseits eine Drehlagerung derart ausgebildet ist, dass mit den zwei Fluiddüsen eine Relativbewegung um den Linsenhalter ausführbar ist, wobei die Düsenaustrittskanäle nach innen ausgerichtet sind. Entsprechend können sich die mehreren Fluiddüsen die Drehlagerung, Drehantriebe, Hubvorrichtungen, den Zulauf und ähnliches teilen. Entsprechend ist ein synchroner Betrieb der mehreren Fluiddüsen möglich. Dies hält die Konstruktion einfach und die Kosten gering. Im Besonderen können sich die Fluiddüsen den Zulauf zumindest teilweise oder komplett teilen, hierbei insbesondere zumindest teilweise oder ganz die Förderpumpe, den Sammelbehälter und/oder die Kühlvorrichtung. Optional sind die Fluiddüsen zumindest im Wesentlichen baugleich ausgebildet.

Zusätzlich kann die Schutzfilmentfernungsvorrichtung ein Gebläse zum Trockenblasen der optischen Line aufweisen.

Des Weiteren kann die Schutzfilmentfernungsvorrichtung eine Abwischvorrichtung aufweisen, die insbesondere derart ausgestaltet ist, dass mit einem Wischwerkzeug die erste Linsenfläche der im Linsenhalter aufgenommenen optischen Linse abwischbar ist.

Eine besonderen Ausführungsform der Erfindung besteht darin, dass die Schutzfilmentfernungsvorrichtung eine zweite Entfernungsstation zum zeitgleich mit der ersten Entfernungsstation Lösen eines Schutzfilms von einer Linsenoberfläche einer zweiten optischen Linse aufweist. Dadurch verdoppelt sich der mögliche Durchsatz an zu bearbeitenden Linsen. Dabei können sich die erste und zweite Entfernungsstation eine Be- und Entladevorrichtung, den Zulauf (insbesondere bis zu einem Verteiler), die Förderpumpe, den Sammelbehälter, die Schutzkabine, eine Steuereinheit und/oder die Kühlvorrichtung teilen.

Die zweite Entfernungsstation kann die optionalen Merkmale der ersten Entfernungsstation optional ebenfalls aufweisen. So kann diese zweite Entfernungsstation einen Linsenhalter aufweisen, insbesondere zur Aufnahme der zweiten optischen Linse, wobei der Linsenhalter eine imaginäre Mittelachse aufweist, die insbesondere bei aufgenommener zweiter optischer Linse quer zur ersten Linsenoberfläche ausgerichtet ist, und wenigstens eine Fluiddüse, wobei jede der Fluiddüsen einen Düsenaustrittskanal aufweist. Zwischen dem Linsenhalter und der oder den Fluiddüsen ist eine Drehlagerung derart ausgebildet, dass mit der oder den Fluiddüsen eine Relativbewegung um die Mittelachse ausführbar ist, wobei der Düsenaustrittskanal der Fluiddüsen jeweils nach innen (insbesondere bezogen auf die Drehlagerung) ausgerichtet ist. Entsprechend der bereits beschriebenen Ausprägung der ersten Entfernungsstation, kann diese Ausprägung auch bei der zweiten Entfernungsstation ausgebildet sein, nämlich, indem zwischen dem Linsenhalter und den Fluiddüsen eine Hubvorrichtung derart ausgebildet ist, dass mit der oder den Fluiddüsen eine Relativbewegung zum Linsenhalter ausführbar ist, die längs, vorzugsweise zumindest im Wesentlichen parallel, und besonders bevorzugt parallel zur Mittelachse ausgerichtet ist. Die Vorteile entsprechen denjenigen der ersten Entfernungsstation, wobei wie erwähnt außerdem zahlreiche Maschinenkomponenten geteilt werden können.

Im Besonderen kann die zweite Entfernungsstation eines oder mehrere der optionalen Merkmale der ersten Entfernungsstation aufweisen. Auch hier resultieren die jeweiligen Vorteile der ersten Entfernungsstation entsprechend. So ist es insbesondere auch umsetzbar, dass die zweite Entfernungsstation zumindest im Wesentlichen merkmalsgleich oder sogar baugleich zur ersten Entfernungsstation ausgebildet ist.

Die Erfindung betrifft außerdem ein Verfahren gemäß Anspruch 13 zum Lösen eines Schutzfilms von einer ersten Linsenoberfläche einer optischen Linse mit wenigstens einer Fluiddüse, wobei die optische Linse eine der ersten Linsenoberfläche gegenüberliegende zweite Linsenoberfläche aufweist, wobei die erste und zweite Linsenoberfläche an einem Linsenumfang begrenzt sind, und wobei die optische Linse eine Linsenachse aufweist. Ein erfindungsgemäßer Verfahrensschritt besteht in einem Durchführen einer relativen Drehbewegung der Fluiddüse oder der Fluiddüsen um den Linsenumfang herum, und Überlagern der relativen Drehbewegung durch eine relative Hubbewegung der Fluiddüse oder den Fluiddüsen insbesondere zur optischen Linse, die längs, vorzugsweise zumindest im Wesentlichen parallel, und besonders bevorzugt parallel zur Linsenachse ausgerichtet ist, wobei die Fluiddüse oder die Fluiddüsen (jeweils) einen nach innen ausgerichteten, geraden Fluidstrahl auf die Einheit aus der optischen Linse und dem Schutzfilm richten. Die Rotationsbewegung und die Hubbewegung erlauben es, den Fluidstrahl präzise in die Trennzone zwischen Schutzfilm und erster Linsenfläche zu lenken und den Schutzfilm sukzessive zu lösen. Für den Einsatz von unterschiedlichen Schutzfilmen und Linsengrößen lassen sich die Drehbewegung und Hubbewegung individuell optimieren, sodass auch kurzfristig zwischen unterschiedlichen Bewegungsprofilen umgestellt werden kann, so zum Beispiel mit elektronisch gespeicherten Bewegungsprofilen.

Gemäß einer optionalen Verfahrensausgestaltung erfolgt die Hubbewegung oszillierend und der oder die Fluidstrahlen werden oszillierend über eine Trennlinie zwischen Schutzfilm und erster Linsenoberfläche hinweggelenkt, wobei sich insbesondere die Trennlinie aufgrund des sukzessiven Lösens des Schutzfilms kontinuierlich hin zur Linsenachse verschiebt. Dadurch kommt es insbesondere zum Abheben des Schutzfilms und dessen sukzessive Trennung von der ersten Linsenoberfläche, bis der Schutzfilm schließlich von der ersten Linsenoberfläche entfernt ist. Dies ist vergleichbar mit einem Spachtel (aus Fluid), der mehrmals von der Linsenfläche (d.h. Linsenumfang oder Linsenoberfläche) in Richtung des Schutzfilms geschoben wird. Man könnte die Hubbewegung beispielsweise als sinuswellenartig modulieren. Aufgrund der sich verschiebenden Trennlinie kann dabei die Nullpunktlage der Hubbewegung der Trennlinie folgen.

In einer speziellen Verfahrenskonfiguration weist die Drehbewegung einen Drehrichtungswechsel auf und die Fluiddüse oder die Fluiddüsen schwenken zwischen zwei Endlagen hin- und her. Der Drehrichtungswechsel begünstigt das Lösen des Schutzfilms, weil hierdurch abwechselnd etwas abweichende Kräfte vom Fluidstrahl auf die Schutzfolie und deren Klebstoff wirken.

Die Anzahl der Hubbewegungen (bzw. der Hubrichtungswechsel) sollte größer sein als die Anzahl der Drehrichtungswechsel, vorzugsweise wenigstens um das Dreifache. Hierdurch wird die Trennzone häufiger vom querenden Fluidstrahl traktiert und dabei der Schutzfilm immer wieder so angehoben, dass er an der Trennzone zerrt eine Schälung durch Zug- und Scherkräfte bewirkt.

Vorzugsweise ist ein erster Drehwinkel zwischen den zwei Endlagen kleiner als 360 Grad, wobei exakt zwei oder wenigstens zwei Fluiddüsen vorgesehen sind und eine der zwei Fluiddüsen um einen definierten zweiten Drehwinkel versetzt zur anderen der zwei Fluiddüsen angeordnet ist, wobei der zweite Drehwinkel größer ist als 360 Grad abzüglich dem ersten Drehwinkel. Durch die versetzt angeordneten Fluiddüsen wird der gesamte Linsenumfang der optischen Linse abgefahren, obwohl die Düsen weniger als 360 Grad weit schwenken. Zusätzlich begünstigt die jeweils hinterherlaufende Fluiddüse den Trennvorgang, indem sie direkt nochmal in die von der vorlaufenden Düse vorgearbeitete Trennzone hineinarbeitet.

Optional kann vorgesehen sein, dass ein Fluid des oder der Fluidstrahlen in einem Zulauf vor der ersten und/oder zweiten Fluiddüse gekühlt werden, insbesondere auf weniger als 40 Grad, bevorzugt auf weniger als 37 Grad, weiter bevorzugt auf weniger als 33 Grad und besonders bevorzugt auf eine Temperatur, die unter der Schmelztemperatur eines Klebstoffs des Schutzfilms liegt. Mit der umgesetzten Kühlung des Fluids wird selbst bei ungünstigen Umgebungstemperaturen, bspw. in nicht klimatisierten Werkhallen, eine Unterschreitung der Schmelztemperatur des Klebstoffs erzielt, damit keine geschmolzenen Klebstoffreste des Schutzfilms auf der ersten Linsenoberfläche verbleiben.

Bevorzugt ist eine parallel zur Linsenachse ausgerichtete Höhe oder der Durchmesser der Fluidstrahlen jeweils kleiner als der maximale Abstand, und bevorzugt als der minimale Abstand, zwischen der ersten und zweiten Linsenoberfläche. Solch ein feiner Fluidstrahl trägt zur Präzision, Effizienz und Ressourcenschonung bei. Vereinfacht gesagt ist die optische Linse dann dicker als der Strahl.

Vorzugsweise haben der oder die Fluidstrahlen einen kreisförmigen Querschnitt. Außerdem ist es zu bevorzugen, den oder die Fluidstrahlen zylindrisch und/oder laminar auszubilden, insbesondere durch entsprechende Konfiguration der Fluiddüsen. So lässt sich ein kompakter, energiereicher Strahl präzise auf die Trennzone zwischen Schutzfilm und optischer Linse richten.

Des Weiteren sollten die Fluidstrahlen mit Ausnahme der Drehbewegungen der Fluiddüsen eine konstante Ausrichtung sowie bezogen auf die Linsenachse eine konstante Neigung aufweisen. Steile Anstellwinkel des Fluidstrahls in der Trennzone zwischen optischer Linse und Schutzfilm sind ineffektiv. Weil die Linsenkrümmung vergleichsweise flach ist ändert sich der Auftreffwinkel nur geringfügig während der Verschiebung der Trennlinie beim sukzessiven Lösen des Schutzfilms. Diese geringe Winkeländerung auszugleichen wäre zwar zusätzlich möglich, ist aber komplex in der Umsetzung.

Optional kann das Verfahren mit einer Schutzfilmentfernungsvorrichtung wie vor- und nachstehend beschrieben ausgeführt werden. Die resultierenden Vorteile der einzelnen Vorrichtungsmerkmale lassen sich so auch im Verfahren realisieren.

Weiterhin steht es dem Fachmann frei, die einzelnen Vorrichtungsmerkmale sinnlogisch in das Verfahren zu integrieren, und umgekehrt konstruktive Maßnahmen aus Verfahrensanforderungen in der Schutzfilmentfernungsvorrichtung umzusetzen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Schnitt durch eine Schutzfilmentfernungsvorrichtung;
- Fig. 2: eine Ansicht von oben auf eine Schutzfilmentfernungsvorrichtung;
- Fig. 3: einen Schnitt durch eine Schutzfilmentfernungsvorrichtung;
- Fig. 4: eine Ansicht von oben auf eine Schutzfilmentfernungsvorrichtung;
- Fig. 5: eine Ansicht einer weiteren Schutzfilmentfernungsvorrichtung; und
- Fig. 6a-c: eine schematische Darstellung des Ablösens des Schutzfilms von einer Linsenoberfläche mit einem Fluidstrahl, der mit einer Hubvorrichtung angetrieben ist.

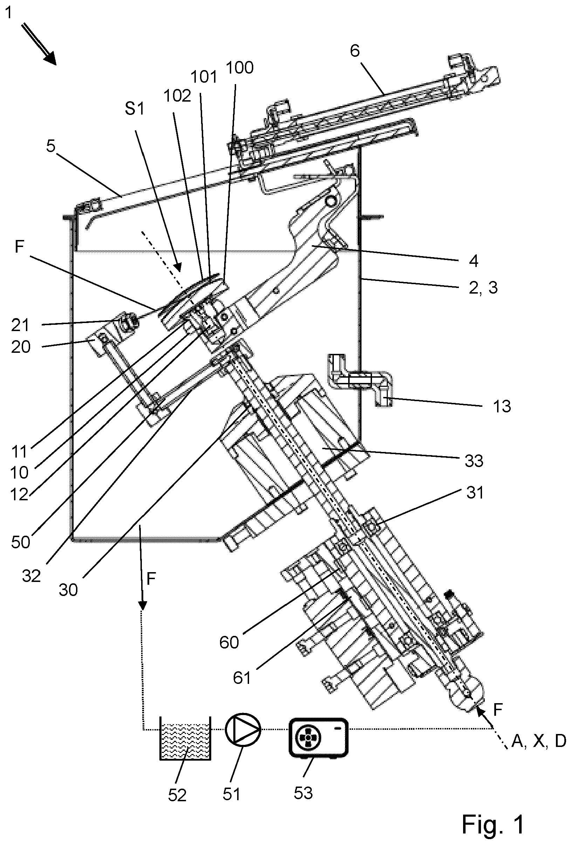

**Fig. 1** zeigt einen Schnitt durch eine Schutzfilmentfernungsvorrichtung 1 mit einer ersten Entfernungsstation S1 zum Lösen eines Schutzfilms 102 von einer ersten Linsenoberfläche 101 einer optischen Linse oder eines un- oder teilbearbeiteten Linsenrohlings 100 (im weiteren einfach optische Linse 100). Der Schutzfilm 102 ist eine Folie, die mit einem Klebstoff auf der ersten Linsenoberfläche 101 fixiert ist, insbesondere einem Selbstklebefilm des Schutzfilms 102.

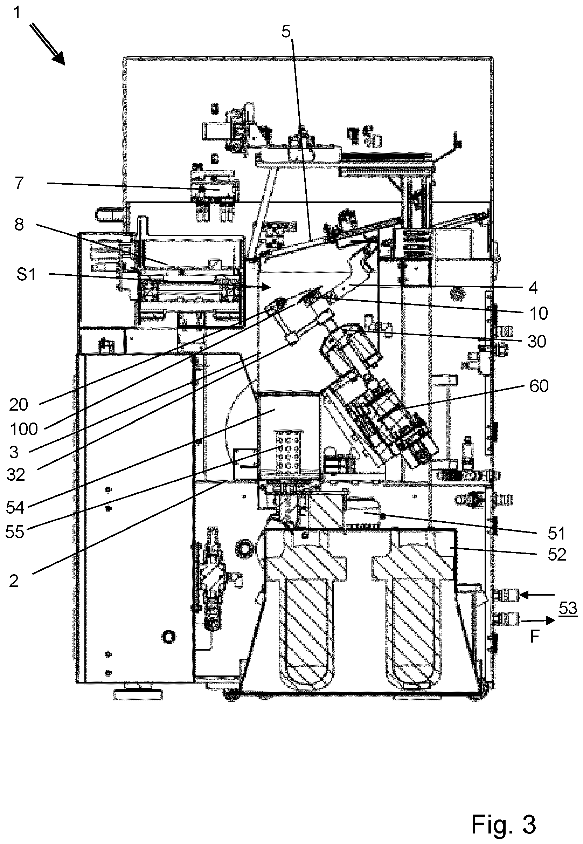

Die Schutzfilmentfernungsvorrichtung 1 weist einen Linsenhalter 10 auf, in dem eine solche optische Linse 100 aufgenommen ist. Dieser ist schwenkbar an einem Schwenkarm 4 in einem Gehäuse 3 eines Maschinengestells 2 angeordnet. Der Schwenkarm 4 ist Teil einer Be- und Entladevorrichtung (siehe Bezugsziffer 7 in Fig. 3) und kann die optische Linse 100 zwischen der dargestellten Bearbeitungsposition in die Nähe eines Gehäuseöffnung 5 bewegen, wo die optische Linse 100 dann bspw. von einem mechanischen Greifer oder Sauggreifer der Entladevorrichtung aus dem Gehäuse 3 entnommen werden kann. Die Gehäuseöffnung 5 verfügt über ein automatisches Verschlusselement 6.

Der Linsenhalter 10 verfügt über eine imaginäre Mittelachse A, die koaxial zu einer Linsenachse X sowie quer zur ersten Linsenoberfläche 101 ausgerichtet ist. Dabei ist der Linsenhalter 10 drehfest relativ zu dem Maschinengestell 2 angeordnet, insbesondere während der Schutzfilm 102 gelöst wird. Die optische Linse 100 liegt auf einer Aufnahmefläche 11 des Linsenhalters 10 auf, durch die ein Ansaugkanal 12 ausmündet, um die optische Linse 100 durch Unterdruck an der Aufnahmefläche 11 zu fixieren. Der Ansaugkanal 12 ist mit einer Unterdruckpumpe 13 verbunden, die außerhalb des Gehäuses 3 sitzt (die Schlauchverbindung zwischen Gehäusedurchführung und Schwenkarm 4 ist nicht dargestellt).

Außerdem weist die Schutzfilmentfernungsvorrichtung 1 eine Fluiddüse 20 mit einem Düsenaustrittskanal 21 auf, der von außen nach innen in Richtung der Mittelachse A ausgerichtet ist. Dabei weist er leicht von oben geneigt in Richtung der ersten Linsenoberfläche 101. Ansonsten hat der Düsenaustrittskanal 21 einen statischen Winkel relativ zur Mittelachse A. Der Düsenaustrittskanal 21 ist derart ausgebildet, dass er einen zumindest im Wesentlichen geraden, zylindrischen und vorzugsweise möglichst laminaren Strahl aus Fluid F erzeugt.

Der Düsenaustrittskanal 21 ist über einen Zulauf 50 mit Fluid F gespeist sind, wobei im Zulauf 50 eine Förderpumpe 51 und eine Kühlvorrichtung 53 zum Kühlen des Fluids F angeordnet sind. Zum Zulauf 50 gehört auch der Abschnitt ab Austritt aus der Fluiddüse 20, denn das gesamte Fluid wird im Kreis gefördert. Dazu sammelt das Gehäuse 3 das Fluid F und leitet es zu einem Sammelbehälter 52 des Zulaufs 50.

Zwischen (mechanisch betrachtet, nicht örtlich) dem Linsenhalter 10 und der Fluiddüse 20 ist eine Drehlagerung 30 angeordnet, sodass die Fluiddüse 20 drehbar um die Drehlagerung 30 und insbesondere drehbar relativ zu dem Maschinengestell 2 ist. Die Drehlagerung 30 ist derart ausgebildet, dass mit der Fluiddüse 20 eine Relativbewegung um die Mittelachse A ausführbar ist, wobei der Düsenaustrittskanal 21 der Fluiddüse 20 nach innen in Richtung der Mittelachse A ausgerichtet ist. Dazu weist die Drehlagerung 30 eine Drehachse D aufweist, die koaxial zur Mittelachse A und der Linsenachse X ausgerichtet ist. Die Drehlagerung 30 ist vorliegend geodätisch unter dem Linsenhalter 10 und dessen Aufnahmefläche 11 angeordnet und weist einen Drehantrieb 33 in Form eines Elektromotors auf.

Weiterhin verfügt die Drehlagerung 30 über ein Drehlager 31 über das ein Ausleger 32 drehbar gelagert ist, wobei die Fluiddüse 20 an dem Ausleger 32 festgelegt ist. Die Drehlagerung 30 liegt mechanisch betrachtet zwischen einer Hubvorrichtung 60 einerseits und den Fluiddüsen 20 andererseits. Die drehenden Teile werden so mit der Hubvorrichtung 60 angehoben und abgesenkt.

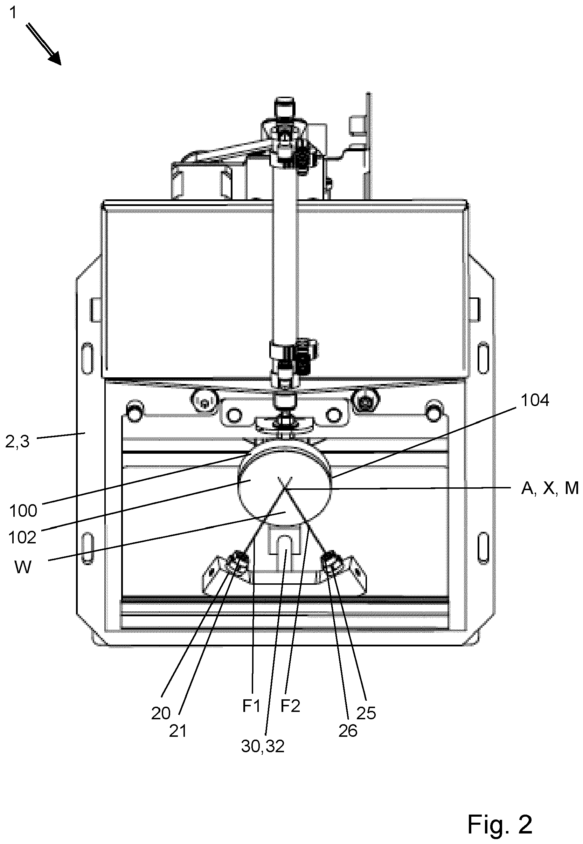

Die Hubvorrichtung 60 wiederum ist mechanisch betrachtet zwischen dem Linsenhalter 10 und der Fluiddüse 20 derart ausgebildet, dass mit den Fluiddüsen 20 eine Relativbewegung zum Linsenhalter 10 ausführbar ist, die parallel zur Mittelachse A ausgerichtet ist. Die Hubvorrichtung 60 weist einen Hubantrieb 61 in Form eines pneumatischen Hubzylinders auf. Eine solche Schutzfilmentfernungsvorrichtung 1 findet sich auch in **Fig. 2** wieder, wobei auf Wiederholungen verzichtet wird. Hier erkennt man, dass eine baugleiche zweite Fluiddüse 25 um einen Drehwinkel W versetzt um die Mittelachse A zur ersten Fluiddüse 20 angeordnet ist. Die zwei Fluiddüsen 20, 25 sind fest miteinander verbunden und der Drehwinkel W sollte zwischen 10 und 180 Grad betragen. Die aus den Düsenaustrittskanälen 21, 26 austretenden Fluidstrahlen F der Fluiddüsen 20, 25 treffen im Schnittpunkt mit der Mittelachse M aufeinander (soweit sie nicht vorher mit der optischen Linse 100 kollidieren, würden sie dies zumindest). Die Drehlagerung 30, über die die beiden Fluiddüsen 20, 25 mit einem gemeinsamen Ausleger 32 schwenkbar gelagert sind, hat einen Drehbereich von weniger als 360 Grad. Dazu ist der Drehantrieb (siehe Bezugsziffer 33 in Fig. 1) mit Richtungswechsler ausgestattet, um die Fluiddüsen 20, 25 mit Drehrichtungswechsel um den Linsenhalter (siehe Bezugsziffer 10 in Fig. 1) bzw. die optische Linse 100 hin- und herzuschwenken. Der Linsenhalter 10 ist bei diesem Hin- und Herschwenken höhenlagefest relativ zu dem Maschinengestell 2 gehalten. Außerdem sind die Fluiddüsen 20, 25 mit der Hubvorrichtung (siehe Bezugsziffer 60 in Fig. 1) parallel zur Mittelachse M beweglich angetrieben.

Mit Hilfe der zwei Fluiddüsen 20 ,25 gelingt es auch bei einem Drehbereich von weniger als 360 Grad 360 Grad des Linsenumfangs 104 der optischen Linse 100 abfahren zu können. Dies ist insbesondere aufgrund der seitlichen Halterung der optischen Linse 100 an dem Schwenkarm 4 von besonderem Vorteil, weil die zwei Fluiddüsen 20, 25 an einem T-förmigen Ende des Auslegers 32 gelagert sind, und so in beiden Drehrichtungen jeweils eine der beiden Fluiddüsen 20, 25 über den Schwenkarm 4 hinwegbewegt werden kann.

Die beiden Fluiddüsen 20, 25 teilen sich einen wie in Fig. 1 gezeigten Zulauf, insbesondere die Förderpumpe, den Sammelbehälter und die Kühlvorrichtung (vgl. Fig. 1, Bezugsziffern 50, 51, 52, 53).

**Fig. 3** zeigt einen Schnitt durch eine Schutzfilmentfernungsvorrichtung 1 mit einer ersten Schutzfilmentfernungsstation 1, welche die Bestandteile der Fig. 1 oder 2 enthält. Gekennzeichnet sind zur Übersicht nur die wichtigsten Bauteile, nämlich die Fluiddüse 20 am mit Drehlagerung 30 und Hubvorrichtung 60 gelagerten Ausleger 32, die optische Linse 100 am Linsenhalter 10, sowie das Maschinengestell 2 und das Gehäuse 3.

Unterhalb des Gehäuses 3 erkennt man, weitere Komponenten des Zulaufs (siehe Bezugsziffer 50 der Fig. 1). So schließt sich unterhalb des Gehäuses 3 zunächst ein Schutzfilmsammelbehälter 54 mit einem Sieb 55 an, in dem die Schutzfilme 102 nach deren Entfernung gesammelt werden. Dieser ist zur Entleerung werkzeuglos aus der Schutzfilmentfernungsvorrichtung 1 entnehmbar. Erst geodätisch unter dem Schutzfilmsammelbehälter 54 findet sich der Sammelbehälter 52 für das Fluid F. Die Entnahme von wieder gesammeltem Fluid F aus dem Sammelbehälter 52 mit der Förderpumpe 51 erfolgt über Filter 56, um ein Verstopfen der Fluiddüse 20 und abrasive Partikel in dem Fluidstrahl zu verhindern. Die Kühlvorrichtung 53, hier insbesondere eine aktive Kühlvorrichtung 53, ist über eine Bypassleitung in den Zulauf 50 eingebunden. Es kann sich dabei um eine Durchlaufkühlung hinter dem Sammelbehälter 52 handeln. Alternativ lässt sich der Bypass auch unmittelbar an den Sammelbehälter 52 anschließen. Eine passive Kühlung, bspw. durch Kühlrippen oder einen Wärmetauscher kann zusätzlich im Zulauf 50 vorgesehen sein.

Das Be- und Entladen des Linsenhalters 10 erfolgt mittels einer Be- und Entladevorrichtung 7 in Form eines Greifers, der zwischen einem Förderband 8 und der Gehäuseöffnung 5 im Gehäuse 3 hin- und herbewegbar ist.

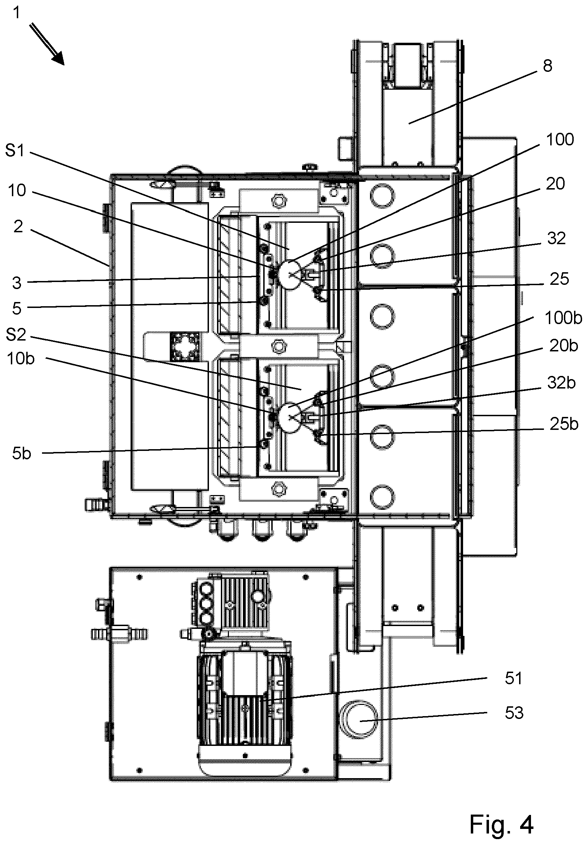

**Fig. 4** zeigt eine Ansicht von oben auf eine Schutzfilmentfernungsvorrichtung 1, die eine erste Entfernungsstation S1 entsprechend denjenigen der Fig. 1, 2 und 3 aufweist. Mit Bezugszeichen versehen sind dabei das Maschinengestell 2, das Gehäuse 3 mit der geöffneten Gehäuseöffnung 5, sowie durch diese Öffnung erkennbar eine optische Linse 100 an einem Linsenhalter 10, um die ein Paar Linsendüsen 20, 25 an einem Ausleger 32 schwenkbar oder rotierbar gelagert sind. Zusätzlich gekennzeichnet sind das Kühlaggregat 53 und die Förderpumpe 51 gemäß den Fig. 1 und 3 sowie das Förderband 8, wie es bereits in Fig. 3 enthalten ist. Das Kühlaggregat 53 und die mit Hochdrucktechnologie arbeitende Förderpumpe 51 sitzen schwingungsisoliert vom Rest der Maschine in einem entkoppelten Gehäusebereich mit eigener Bodenaufstellung.

Gegenüber der Ausführung nach den Fig. 1, 2 und 3 ist hier erstmals eine zweite Entfernungsstation S2 dargestellt, welche entsprechend der Merkmale der ersten Entfernungsstation S1 aufgebaut ist. Auch hier erkennt man durch eine Gehäuseöffnung 5b eine optische Linse 100b, die an einem Linsenhalter 10b gehalten ist. Ein Paar Linsendüsen 20b, 25b ist mit einem Ausleger 32b schwenkbar um die optische Linse 100b herum gelagert. Bezüglich der weiteren Merkmale der zweiten Entfernungsstation S2 wird auf die Beschreibung der ersten Entfernungsstation S1 verwiesen.

Die erste und zweite Entfernungsstation S1, S2 teilen sich den Zulauf zumindest teilweise teilen, hierbei insbesondere zumindest teilweise oder ganz die Förderpumpe, den Sammelbehälter, den Schutzfilmsammelbehälter, die Filter und/oder die Kühlvorrichtung 53.

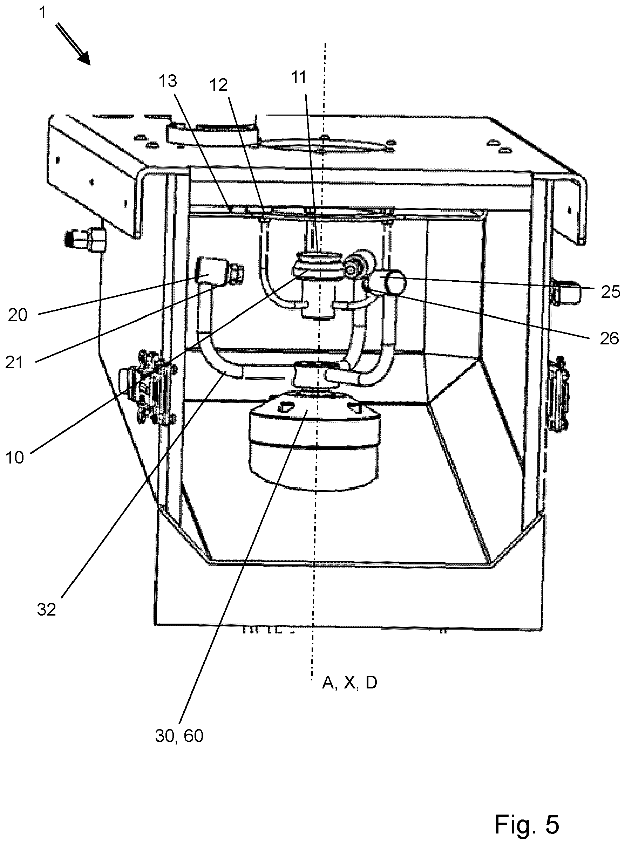

**Fig. 5** zeigt eine abweichend ausgestaltete Schutzfilmentfernungsvorrichtung 1. Diese weist exakt drei Fluiddüsen 20, 25 mit je einem Fluidaustrittskanal 21, 26 auf, die über je einen Ausleger 32 mit einer Drehlagerung 30 und Hubvorrichtung 60 verbinden sind. Hierdurch können die Fluiddüsen 20, 25 jeweils mit nach innen gerichteten Fluiddüsen 20, 25 um eine Drehachse D, welche zugleich Mittelachse M eines Linsenhalters 10 ist rotiert sowie entlang dieser Mittelachse M angehoben und abgesenkt werden. Die Mittelachse M entspricht im Betrieb typischerweise der Linsenachse X einer im Linsenhalter 10 gehaltenen optischen Linse. Die drei Ausleger 32 der Fluiddüsen 20, 25 sind gleichverteilt über dem Umfang verteilt angeordnet und bilden eine Art Korb. Innerhalb dieses Korbs sitzt der Linsenhalter 10, sodass die Fluiddüsen 20, 25 frei um den Linsenhalter 10 rotieren können. Der Linsenhalter 10 ist hierzu von oben zwischen die Ausleger 32 getaucht, ohne diese oder die Fluiddüsen 20, 25 zu berühren. Eine Unterdruckpumpe 13 ist über einen Ansaugkanal 12 mit einer Öffnung in einer Aufnahmefläche 11 zum Festsaugen einer optischen Linse verbunden. Der Hauptunterschied der Ausführung zu Fig. 1 liegt also darin, dass kein Schwenkarm vorgesehen ist, sondern der Linsenhalter 10 zwischen die Fluiddüsen 20, 25 getaucht ist. Außerdem sind die Fluiddüsen 20, 25 gleichverteilt über dem Umfang verteilt angeordnet und können mehr als 360 Grad drehen. Trotzdem kann auch hier ein begrenzter Drehwinkel vorgesehen sein und ein Richtungswechsel der Drehbewegung umgesetzt sein.

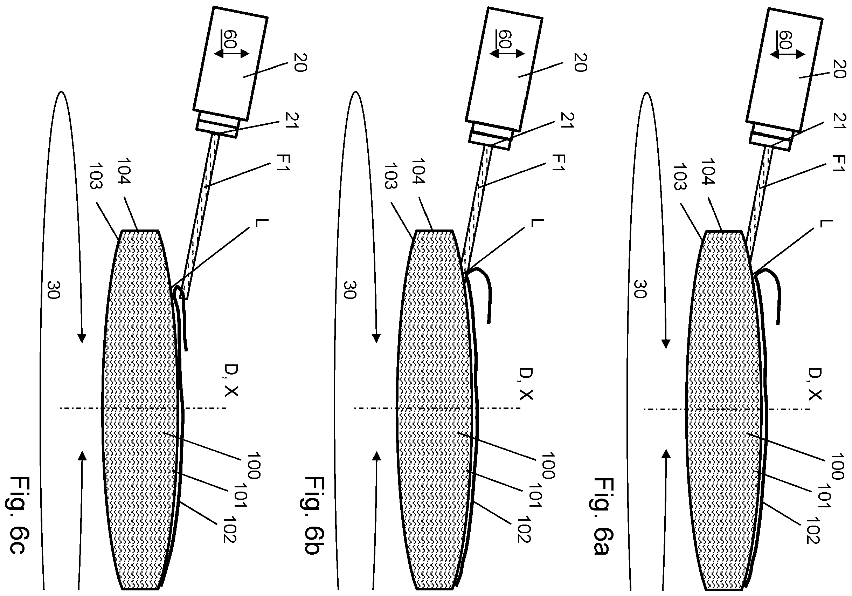

Die schematischen Darstellungen der **Fig. 6a, 6b und 6c** zeigen das Ablösens eines Schutzfilms 102 von einer ersten Linsenoberfläche 101 einer optischen Linse 100 mit einem Fluidstrahl F1. Die optische Linse 100 weist neben der ersten Linsenoberfläche 101 eine gegenüberliegende zweite Linsenoberfläche 103 auf. Die erste und zweite Linsenoberfläche 102, 103 sind an einem Linsenumfang 104 begrenzt.

Des Weiteren erkennt man eine Fluiddüse 20, die einen geraden, zylindrischen und weitestgehend laminaren Fluidstrahl F1 ausgibt. Dieser ist von außen nach innen in Richtung der Linsenachse X ausgerichtet und dabei leicht von oben auf die erste Linsenoberfläche 101 ausgerichtet. Die Fluiddüse 20 ist rotierend oder schwenkend um eine Drehachse D angetrieben, die koaxial zur Linsenachse X ausgerichtet ist.

Zusätzlich ist die Fluiddüse 20 mit einer Hubvorrichtung 60 angetrieben, welche eine Höhenlageänderung parallel zur Drehachse D bewirkt. In **Fig. 6a** erkennt man, wie der Fluidstrahl F1 vor einer Trennlinie L zwischen der ersten Linsenoberfläche 101 und dem Schutzfilm 102 auf die erste Linsenoberfläche 101 auftrifft. Gemäß **Fig. 6b** ist die Fluiddüse 20 mit der Hubvorrichtung 60 leicht nach oben bewegt und der Fluidstrahl F1 trifft genau zwischen der ersten Linsenoberfläche 101 und dem Schutzfilm 102 auf die Trennlinie L. Durch weiteren Hub der Fluiddüse 20 mit der Hubvorrichtung 60 gemäß **Fig. 6c** wandert der Fluidstrahl F1 über die Trennlinie L hinweg, drückt ein umgeschlagenes Ende des Schutzfilms 102 herunter und übt dabei Zug auf die Trennlinie L aus. Jetzt kann die Fluiddüse 20 wieder abgesenkt und anschließend erneut gemäß entsprechend den **Fig. 6a, 6b und 6c** angehoben werden. Gleichzeitig wird die Fluiddüse 20 um eine Drehlagerung 30 um die Linsenachse X geschwenkt oder gedreht. Bei solch einer Schwenk- bzw. Drehbewegung und überlagerten oszillierenden Hubbewegung verschiebt sich die Trennlinie L immer weiter in Richtung der Linsenachse X bis sie schließlich gelöst ist. Bevorzugt weist die Drehbewegung einen Drehrichtungswechsel auf und die Fluiddüse 20 wird zwischen zwei Endlagen hin- und herschwenken. Die Anzahl der Hubbewegungen ist vorzugsweise größer als die Anzahl der Drehrichtungswechsel, vorzugsweise wenigstens um das Dreifache.

### Bezugszeichenliste

| | | | |
|---|---|---|---|
| 1 | Schutzfilmentfernungsvorrichtung | 60 | Hubvorrichtung |
| 2 | Maschinengestell | 61 | Hubantrieb |
| 3 | Gehäuse | | |
| 4 | Schwenkarm | 100 | optische Linse oder Linsenrohling |
| 5 | Gehäuseöffnung | 101 | erste Linsenoberfläche |
| 6 | Verschlusselement | 102 | Schutzfilm |
| 7 | Be- und Entladevorrichtung | 103 | zweite Linsenoberfläche |
| 8 | Förderband | 104 | Linsenumfang |
| 10 | Linsenhalter | A | Mittelachse |
| 11 | Aufnahmefläche | D | Drehachse |
| 12 | Ansaugkanal | F | Fluid |
| 13 | Unterdruckpumpe | F1 | Fluidstrahl |
| | | F2 | Fluidstrahl |
| 20 | Fluiddüse | L | Trennlinie |
| 21 | Düsenaustrittskanal | S1 | erste Entfernungsstation |
| 25 | Fluiddüse | S2 | zweite Entfernungsstation |
| 26 | Düsenaustrittskanal | W | Drehwinkel |
| | | X | Linsenachse |
| 30 | Drehlagerung | | |
| 31 | Drehlager | Die zweite Entfernungsstation betreffende Merkmale: | |
| 32 | Ausleger | | |
| 33 | Drehantrieb | 5b | Gehäuseöffnung |
| | | 10b | Linsenhalter |
| 50 | Zulauf | 20b | Fluiddüse |
| 51 | Förderpumpe | 25b | Fluiddüse |
| 52 | Sammelbehälter | 32b | Ausleger |
| 53 | Kühlvorrichtung | 100b | zweite optische Linse oder zweiter Linsenrohling |
| 54 | Schutzfilmsammelbehälter | | |
| 55 | Sieb | | |
| 56 | Filter | | |

## Patentansprüche

1. **Schutzfilmentfernungsvorrichtung** (1) mit einer ersten Entfernungsstation (S1) zum Lösen eines Schutzfilms (102) von einer ersten Linsenoberfläche (101) einer optischen Linse (100),
- mit einem Linsenhalter (10),
o wobei der Linsenhalter (10) eine imaginäre Mittelachse (A) aufweist, die bei aufgenommener optischer Linse quer zur ersten Linsenoberfläche (101) ausgerichtet ist,
- mit wenigstens einer Fluiddüse (20, 25) mit einem Düsenaustrittskanal (21, 26), und
- mit einer Drehlagerung (30) zwischen dem Linsenhalter (10) und der oder den Fluiddüsen (20, 25),
o wobei die Drehlagerung (30) derart ausgebildet ist, dass mit der oder den Fluiddüsen (20, 25) eine Relativbewegung um die Mittelachse (A) ausführbar ist, wobei der Düsenaustrittskanal (21, 26) der Fluiddüsen (20, 25) jeweils nach innen ausgerichtet ist,
**dadurch gekennzeichnet, dass**
- zwischen dem Linsenhalter (10) und der oder den Fluiddüsen (20, 25) eine Hubvorrichtung (60) derart ausgebildet ist, dass mit der oder den Fluiddüsen (20) eine Relativbewegung zum Linsenhalter (10) ausführbar ist, die längs zur Mittelachse (A) ausgerichtet ist.

2. Schutzfilmentfernungsvorrichtung (1) gemäß Anspruch 1, **dadurch gekennzeichnet, dass** der oder die Düsenaustrittskanäle (21) jeweils derart ausgebildet sind, dass sie einen zumindest im Wesentlichen geraden Strahl aus Fluid (F) erzeugen.

3. Schutzfilmentfernungsvorrichtung (1) gemäß einem der Ansprüche 1 oder 2, **dadurch gekennzeichnet, dass** der Linsenhalter (10) drehfest angeordnet ist und die Fluiddüse oder die Fluiddüsen (20, 25) jeweils drehbar um die Drehlagerung (30) angeordnet sind.

4. Schutzfilmentfernungsvorrichtung (1) gemäß einem der vorhergehenden Ansprüche, **dadurch gekennzeichnet, dass** der oder die Düsenaustrittskanäle (21, 26) jeweils über einen Zulauf (50) mit Fluid (F) gespeist sind, wobei im Zulauf (50) eine Förderpumpe (51) und/oder eine Kühlvorrichtung (53) zum Kühlen des Fluids (F) angeordnet ist.

5. Schutzfilmentfernungsvorrichtung (1) gemäß einem der vorhergehenden Ansprüche, **dadurch gekennzeichnet, dass** der oder die Düsenaustrittskanäle (21, 26) jeweils mit Ausnahme der Drehlagerung (30) einen statischen Winkel aufweisen.

6. Schutzfilmentfernungsvorrichtung (1) gemäß einem der vorhergehenden Ansprüche, **dadurch gekennzeichnet, dass** die Drehlagerung (30) ein Drehlager (31) und hieran einen Ausleger (32) oder eine Scheibe aufweist, wobei die Fluiddüse oder die Fluiddüsen (20, 25) jeweils an dem Ausleger (32) oder der Scheibe festgelegt sind.

7. Schutzfilmentfernungsvorrichtung (1) gemäß einem der vorhergehenden Ansprüche, **dadurch gekennzeichnet, dass** die Drehlagerung (30) einen begrenzten Drehbereich aufweist, der bevorzugt weniger als 360 Grad beträgt.

8. Schutzfilmentfernungsvorrichtung (1) gemäß einem der vorhergehenden Ansprüche, **dadurch gekennzeichnet, dass** der Linsenhalter (10) höhenlagefest angeordnet ist und die Fluiddüsen (20) mit der Hubvorrichtung (60) längs zur Mittelachse (A) beweglich angetrieben sind.

9. Schutzfilmentfernungsvorrichtung (1) gemäß einem der vorhergehenden Ansprüche, **dadurch gekennzeichnet, dass** die Drehlagerung (30) zwischen der Hubvorrichtung (60) einerseits und der oder den Fluiddüsen (20, 25) andererseits angeordnet ist.

10. Schutzfilmentfernungsvorrichtung (1) gemäß einem der vorhergehenden Ansprüche, **dadurch gekennzeichnet, dass** diese exakt zwei oder wenigstens zwei oder exakt drei oder wenigstens drei Fluiddüsen (20, 25) aufweist.

11. Schutzfilmentfernungsvorrichtung (1) gemäß einem der vorhergehenden Ansprüche, **dadurch gekennzeichnet, dass** diese wenigstens zwei Fluiddüsen (20, 25) aufweist, wobei eine der zwei Fluiddüsen (25) um einen definierten Drehwinkel (W) um die Mittelachse (A) versetzt zur anderen der zwei Fluiddüsen (20) angeordnet ist.

12. Schutzfilmentfernungsvorrichtung (1) gemäß einem der vorhergehenden Ansprüche, **dadurch gekennzeichnet, dass** diese eine zweite Entfernungsstation (S2) zum zeitgleich mit der ersten Entfernungsstation (S1) Lösen eines Schutzfilms von einer Linsenoberfläche einer zweiten optischen Linse (100b) aufweist,
- mit einem Linsenhalter (10b),
o wobei der Linsenhalter (10b) eine imaginäre Mittelachse aufweist,
- mit wenigstens einer Fluiddüse (20b, 25b),
o wobei jede der Fluiddüsen (20b, 25b) einen Düsenaustrittskanal aufweist, und
- mit einer Drehlagerung zwischen dem Linsenhalter (10b) und der oder den Fluiddüsen (20b),
o wobei die Drehlagerung (30) derart ausgebildet ist, dass mit der oder den Fluiddüsen (20b, 25b) eine Relativbewegung um die Mittelachse ausführbar ist, wobei der Düsenaustrittskanal der Fluiddüsen (20b, 25b) jeweils nach innen ausgerichtet ist,
**dadurch gekennzeichnet, dass**
- zwischen dem Linsenhalter (10b) und der oder den Fluiddüsen (20b, 25b) eine Hubvorrichtung derart ausgebildet ist, dass mit der oder den Fluiddüsen (20b, 25b) eine Relativbewegung zum Linsenhalter (10b) ausführbar ist, die längs zur Mittelachse ausgerichtet ist.

13. **Verfahren** zum Lösen eines Schutzfilms (102) von einer ersten Linsenoberfläche (101) einer optischen Linse (100) mit wenigstens einer Fluiddüse (20, 25),
- wobei die optische Linse (100) eine der ersten Linsenoberfläche (101) gegenüberliegende zweite Linsenoberfläche (103) aufweist,
- wobei die erste und zweite Linsenoberfläche (101, 103) an einem Linsenumfang (104) begrenzt sind, und
- wobei die optische Linse (100) eine Linsenachse (X) aufweist,
umfassend den folgenden Schritt:
- Durchführen einer relativen Drehbewegung der Fluiddüse (20) oder der Fluiddüsen (20, 25) um den Linsenumfang (104) herum, und Überlagern der relativen Drehbewegung durch eine relative Hubbewegung der Fluiddüse (20) oder den Fluiddüsen (20, 25), die längs zur Linsenachse (X) ausgerichtet ist,
wobei die Fluiddüse (20) oder die Fluiddüsen (20, 25) einen nach innen ausgerichteten, geraden Fluidstrahl (F1, F2) auf die Einheit aus der optischen Linse (100) und dem Schutzfilm (102) richten.

14. Verfahren nach Anspruch 13, **dadurch gekennzeichnet, dass** die Hubbewegung oszillierend erfolgt und der oder die Fluidstrahlen (F1, F2) oszillierend über eine Trennlinie (L) zwischen Schutzfilm (102) und erster Linsenoberfläche (101) hinweggelenkt werden.

15. Verfahren nach einem der Ansprüche 13 oder 14, **dadurch gekennzeichnet, dass** die Drehbewegung einen Drehrichtungswechsel aufweist und die Fluiddüse (20) oder die Fluiddüsen (20, 25) zwischen zwei Endlagen hin- und herschwenken.

## Claims

1. **Protective film removing device** (1) having a first removing station (S1) for detaching a protective film (102) from a first lens surface (101) of an optical lens (100),
- with a lens holder (10),
o wherein the lens holder (10) has an imaginary central axis (A) which is aligned transversely to the first lens surface (101) when the optical lens is mounted,
- with at least one fluid nozzle (20, 25) with a nozzle outlet channel (21, 26), and
- with a pivot bearing (30) between the lens holder (10) and the fluid nozzle(s) (20, 25),
o wherein the pivot bearing (30) is designed such that a relative movement about the central axis (A) can be executed with the fluid nozzle or nozzles (20, 25), wherein the nozzle outlet channel (21, 26) of the fluid nozzles (20, 25) is aligned inwards in each case,
**characterized in that**
- a lifting device (60) is formed between the lens holder (10) and the fluid nozzle or nozzles (20, 25) in such a way that a movement relative to the lens holder (10) can be carried out with the fluid nozzle or nozzles (20), which movement is aligned along the central axis (A).

2. Protective film removal device (1) according to claim 1, **characterized in that** the nozzle outlet channel or channels (21) are each designed in such a way that they produce an at least substantially straight jet of fluid (F).

3. Protective film removal device (1) according to one of claims 1 or 2, **characterized in that** the lens holder (10) is arranged in a rotationally fixed manner and the fluid nozzle or the fluid nozzles (20, 25) are each arranged rotatably about the pivot bearing (30).

4. Protective film removal device (1) according to one of the preceding claims, **characterized in that** the nozzle outlet channel or channels (21, 26) are each fed with fluid (F) via an inlet (50), a feed pump (51) and/or a cooling device (53) for cooling the fluid (F) being arranged in the inlet (50).

5. Protective film removal device (1) according to one of the preceding claims, **characterized in that** the nozzle outlet channel or channels (21, 26) each have a static angle with the exception of the pivot bearing (30).

6. Protective film removal device (1) according to one of the preceding claims, **characterized in that** the pivot bearing (30) has a pivot bearing (31) and an extension arm (32) or a disc thereon, the fluid nozzle or the fluid nozzles (20, 25) each being fixed to the extension arm (32) or the disc.

7. Protective film removal device (1) according to one of the preceding claims, **characterized in that** the pivot bearing (30) has a limited range of rotation, which is preferably less than 360 degrees.

8. Protective film removal device (1) according to one of the preceding claims, **characterized in that** the lens holder (10) is arranged fixed in height and the fluid nozzles (20) are driven movably along the central axis (A) by the lifting device (60).

9. Protective film removal device (1) according to one of the preceding claims, **characterized in that** the pivot bearing (30) is arranged between the lifting device (60) on the one hand and the fluid nozzle or nozzles (20, 25) on the other hand.

10. Protective film removal device (1) according to one of the preceding claims, **characterized in that** it has exactly two or at least two or exactly three or at least three fluid nozzles (20, 25).

11. Protective film removal device (1) according to one of the preceding claims, **characterized in that** it has at least two fluid nozzles (20, 25), one of the two fluid nozzles (25) being arranged offset by a defined angle of rotation (W) about the central axis (A) with respect to the other of the two fluid nozzles (20).

12. Protective film removal device (1) according to one of the preceding claims, **characterized in that** it comprises a second removal station (S2) for detaching a protective film from a lens surface of a second optical lens (100b) at the same time as the first removal station (S1),
- with a lens holder (10b),
o wherein the lens holder (10b) has an imaginary central axis,
- with at least one fluid nozzle (20b, 25b),
o wherein each of the fluid nozzles (20b, 25b) has a nozzle outlet channel, and
- with a pivot bearing between the lens holder (10b) and the fluid nozzle(s) (20b),
o wherein the pivot bearing (30) is designed such that a relative movement about the central axis can be executed with the fluid nozzle or nozzles (20b, 25b), wherein the nozzle outlet channel of the fluid nozzles (20b, 25b) is aligned inwards in each case,
**characterized in that**
- a lifting device is formed between the lens holder (10b) and the fluid nozzle or nozzles (20b, 25b) in such a way that the fluid nozzle or nozzles (20b, 25b) can perform a movement relative to the lens holder (10b) which is aligned along the central axis.

13. **A method** of detaching a protective film (102) from a first lens surface (101) of an optical lens (100) having at least one fluid nozzle (20, 25),
- wherein the optical lens (100) has a second lens surface (103) opposite the first lens surface (101),
- wherein the first and second lens surfaces (101, 103) are bounded at a lens periphery (104), and
- wherein the optical lens (100) has a lens axis (X),
comprising the following step:
- Performing a relative rotary movement of the fluid nozzle (20) or the fluid nozzles (20, 25) around the lens circumference (104), and superimposing the relative rotary movement by a relative stroke movement of the fluid nozzle (20) or the fluid nozzles (20, 25), which is aligned along the lens axis (X),
wherein the fluid nozzle (20) or the fluid nozzles (20, 25) direct an inwardly directed, straight fluid jet (F1, F2) onto the unit comprising the optical lens (100) and the protective film (102).

14. Method according to claim 13, **characterized in that** the stroke movement is oscillating and the fluid jet or jets (F1, F2) are oscillatingly deflected over a dividing line (L) between the protective film (102) and the first lens surface (101).

15. Method according to one of claims 13 or 14, **characterized in that** the rotary movement has a change in direction of rotation and the fluid nozzle (20) or the fluid nozzles (20, 25) swivel back and forth between two end positions.

## Revendications

1. **Dispositif d'enlèvement de film protecteur** (1) comprenant un premier poste d'enlèvement (S1) pour détacher un film protecteur (102) d'une première surface de lentille (101) d'une lentille optique (100),
- avec un support de lentille (10),
o dans lequel le support de lentille (10) a un axe central imaginaire (A) qui est orienté transversalement à la première surface de lentille (101) lorsque la lentille optique est reçue,
- avec au moins une buse de fluide (20, 25) avec un canal de sortie de buse (21, 26), et
- avec un palier de rotation (30) entre le support de lentille (10) et la ou les buses de fluide (20, 25),
o le palier de rotation (30) étant conçu de telle sorte qu'un mouvement relatif autour de l'axe central (A) peut être exécuté avec la ou les buses de fluide (20, 25), le canal de sortie de buse (21, 26) des buses de fluide (20, 25) étant orienté respectivement vers l'intérieur,
**caractérisé en ce que**
- entre le support de lentille (10) et la ou les buses de fluide (20, 25) est réalisé un dispositif de levage (60) de telle sorte qu'avec la ou les buses de fluide (20) peut être exécuté un mouvement relatif par rapport au support de lentille (10), qui est orienté le long de l'axe central (A).

2. Dispositif d'élimination de film protecteur (1) selon la revendication 1, **caractérisé en ce que** le ou les canaux de sortie de buse (21) sont chacun configurés pour produire un jet au moins sensiblement rectiligne de fluide (F).

3. Dispositif d'enlèvement de film protecteur (1) selon l'une des revendications 1 ou 2, **caractérisé en ce que** le support de lentille (10) est monté fixe en rotation et la ou les buses de fluide (20, 25) sont montées chacune en rotation autour du palier de rotation (30).

4. Dispositif d'élimination de film protecteur (1) selon l'une des revendications précédentes, **caractérisé en ce que** le ou les canaux de sortie de buse (21, 26) sont alimentés chacun en fluide (F) par une arrivée (50), une pompe d'alimentation (51) et/ou un dispositif de refroidissement (53) pour refroidir le fluide (F) étant disposés dans l'arrivée (50).

5. Dispositif d'élimination de film protecteur (1) selon l'une quelconque des revendications précédentes, **caractérisé en ce que** le ou les canaux de sortie de buse (21, 26) présentent chacun, à l'exception du palier rotatif (30), un angle statique.

6. Dispositif d'enlèvement de film protecteur (1) selon l'une quelconque des revendications précédentes, **caractérisé en ce que** le palier rotatif (30) comprend un palier rotatif (31) et, sur celui-ci, une flèche (32) ou un disque, la ou les buses de fluide (20, 25) étant fixées respectivement à la flèche (32) ou au disque.

7. Dispositif d'enlèvement de film protecteur (1) selon l'une quelconque des revendications précédentes, **caractérisé en ce que** le palier rotatif (30) présente une plage de rotation limitée, de préférence inférieure à 360 degrés.

8. Dispositif d'enlèvement de film protecteur (1) selon l'une des revendications précédentes, **caractérisé en ce que** le support de lentille (10) est disposé de manière fixe en hauteur et **en ce que** les buses de fluide (20) sont entraînées de manière mobile le long de l'axe central (A) avec le dispositif de levage (60).

9. Dispositif d'enlèvement de film protecteur (1) selon l'une quelconque des revendications précédentes, **caractérisé en ce que** le palier rotatif (30) est disposé entre le dispositif de levage (60) d'une part et la ou les buses de fluide (20, 25) d'autre part.

10. Dispositif d'enlèvement de film protecteur (1) selon l'une quelconque des revendications précédentes, **caractérisé en ce qu'**il comprend exactement deux ou au moins deux ou exactement trois ou au moins trois buses de fluide (20, 25).

11. Dispositif d'enlèvement de film protecteur (1) selon l'une des revendications précédentes, **caractérisé en ce qu'**il comporte au moins deux buses de fluide (20, 25), l'une des deux buses de fluide (25) étant décalée d'un angle de rotation (W) défini autour de l'axe central (A) par rapport à l'autre des deux buses de fluide (20).

12. Dispositif d'enlèvement de film protecteur (1) selon l'une quelconque des revendications précédentes, **caractérisé en ce qu'**il comprend un deuxième poste d'enlèvement (S2) pour détacher un film de protection d'une surface de lentille d'une deuxième lentille optique (100b) en même temps que le premier poste d'enlèvement (S1),
- avec un support de lentille (10b),
o dans lequel le support de lentille (10b) a un axe central imaginaire,
- avec au moins une buse à fluide (20b, 25b),
o chacune desdites buses de fluide (20b, 25b) ayant un canal de sortie de buse, et
- avec un palier de rotation entre le support de lentille (10b) et la ou les buses de fluide (20b),
o le palier de rotation (30) étant réalisé de telle sorte qu'un mouvement relatif autour de l'axe central peut être exécuté avec la ou les buses de fluide (20b, 25b), le canal de sortie de buse des buses de fluide (20b, 25b) étant orienté respectivement vers l'intérieur,
**caractérisé en ce que**
- entre le support de lentille (10b) et la ou les buses de fluide (20b, 25b) est réalisé un dispositif de levage de telle sorte qu'avec la ou les buses de fluide (20b, 25b) peut être exécuté un mouvement relatif par rapport au support de lentille (10b), qui est orienté le long de l'axe central.

13. **Procédé** pour détacher un film protecteur (102) d'une première surface de lentille (101) d'une lentille optique (100) comportant au moins une buse de fluide (20, 25),
- dans lequel la lentille optique (100) comprend une seconde surface de lentille (103) opposée à la première surface de lentille (101),
- dans lequel les première et deuxième surfaces de lentille (101, 103) sont limitées à une périphérie de lentille (104), et
- dans lequel la lentille optique (100) a un axe de lentille (X),
comprend l'étape suivante :
- effectuer un mouvement de rotation relatif de la buse de fluide (20) ou des buses de fluide (20, 25) autour de la périphérie de la lentille (104), et superposer au mouvement de rotation relatif un mouvement de levage relatif de la buse de fluide (20) ou des buses de fluide (20, 25) qui est orienté longitudinalement par rapport à l'axe de la lentille (X),
dans lequel la buse de fluide (20) ou les buses de fluide (20, 25) dirigent un jet de fluide rectiligne (F1, F2) orienté vers l'intérieur sur l'ensemble constitué de la lentille optique (100) et du film protecteur (102).

14. Procédé selon la revendication 13, **caractérisé en ce que** le mouvement de levage est oscillant et le ou les jets de fluide (F1, F2) sont déviés de manière oscillante pardessus une ligne de séparation (L) entre le film protecteur (102) et la première surface de lentille (101).

15. Procédé selon l'une des revendications 13 ou 14, **caractérisé en ce que** le mouvement de rotation présente un changement de sens de rotation et **en ce que** la buse de fluide (20) ou les buses de fluide (20, 25) pivotent en va-et-vient entre deux positions extrêmes.
